# EUROPÄISCHE PATENTSCHRIFT

(11) **EP 1 880 535 B1**
(45) Veröffentlichungstag und Bekanntmachung des Hinweises auf die Patenterteilung: **08.04.2015**
(21) Anmeldenummer: 06708305.5
(22) Anmeldetag: 16.02.2006
(51) Int. Cl.: H04M 3/436

(54) **VERFAHREN ZUR ABWEHR UNERWÜNSCHTER TELEFONWERBUNG FÜR KOMMUNIKATIONSNETZE**
METHOD FOR PROTECTION AGAINST UNDESIRABLE TELEMARKETING ADVERTISEMENTS FOR COMMUNICATION NETWORKS
PROCEDE DE PROTECTION CONTRE LES ANNONCES DE TELEMARKETING INDESIRABLES POUR DES RESEAUX DE COMMUNICATION

(30) Priorität: 30.03.2005 DE 102005014524
(43) Veröffentlichungstag der Anmeldung: 23.01.2008
(73) Patentinhaber: Unify GmbH & Co. KG, 81379 München (DE)
(72) Erfinder: LANKES, Holger, 82178 Puchheim (DE)
(74) Vertreter: Fritzsche, Thomas
(86) Internationale Anmeldenummer: PCT/EP2006/060011
(87) Internationale Veröffentlichungsnummer: WO 2006/103142

(56) Entgegenhaltungen:
- US-A- 5 371 787
- US-A1- 2003 023 736
- US-A1- 2004 213 396

## Beschreibung

Sowohl in herkömmlichen zeitmultiplexorientierten Telefonnetzen als auch bei Telefonie über das Internet werden die Teilnehmer in zunehmenden Maße mit unerwünschter Telefonwerbung - in der Fachwelt auch als Spam bezeichnet - konfrontiert. Die unerwünschte Telefonwerbung wird durch Anrufautomaten durchgeführt, mit deren Hilfe willkürlich oder gezielt Rufnummer gewählt werden und durch gespeicherte, vorgegebene Sprachinformation wird versucht, dem angerufenen Teilnehmer Waren oder Dienstleistungen zu verkaufen oder den angerufenen Teilnehmer dazu zu verleiten, einen teuren Rückruf bei einem Premium Service, z.B. 0190 durchzuführen.

Eine Möglichkeit, sich vor unerwünschter telefonischer Werbung teilweise zu schützen besteht darin, eine in der Fachwelt als "Robinsonliste" bekannte Liste zu benutzen. In die vom Deutschen Direkt-Marketing-Verband verwaltete Robinson-Liste können sich Teilnehmer eintragen lassen, um zu bewirken, dass die dem Verband angehörenden Werbefirmen den eingetragenen Teilnehmern keine telefonische Werbung oder Werbung per Fax oder E-Mail zusenden. Es ist jedoch zu bemerken, dass die Nutzung dieser Listen durch die Werbefirmen freiwillig ist und nicht alle Werbefirmen dem Verband angehören. Auch ist diese Robinson- Liste nur in Deutschland wirksam, d.h. vom Ausland übermittelte telefonische Werbung kann dadurch nicht verhindert werden.

Eine weitere Möglichkeit, unerwünschte Werbung zu verhindern, besteht darin, einen Anrufbeantworter in jeden ankommenden Anruf einzuschleifen. Der Nachteil dieses Verfahrens ist eine unnötige Belegung von Ressourcen (Amtsleitungen, Speicherplatz) beim Angerufenen. Außerdem erreicht der Anrufer über dieses Verfahren eventuell sein Ziel eines Rückrufes zeitversetzt.

In US2004213396 sind Verfahren zur Reduzierung von Ereignissen belästigender Anrufe offenbart. Der Teilnehmer erkennt einen Anruf als unerwünschten (oder "belästigenden") Anruf nach Beantworten, Filtern oder Überprüfen von aufgenommenen Nachrichten von Anrufen. In einer Ausführungsform erhält oder filtert der angerufene Teilnehmer einen Anruf und informiert ein abschließendes Büro, dass er wünscht, zukünftige Anrufe von dem Anrufer zu blockieren. Das abschließende Büro bestimmt die Verzeichnisnummer des anrufenden Teilnehmers und bewirkt, dass die Verzeichnisnummer zu einer Blockierungsdatenbank hinzugefügt wird.

Aus der US 2003/0023736 A1 ist ein Verfahren und ein System zur Filterung von Nachrichten bekannt, bei dem anhand von gespeicherten Autorisierungskriterien und von Nachrichtenkriterien von empfangenen Nachrichten bestimmt wird, ob die empfangene Nachricht autorisiert ist oder nicht. Anschließend wird ein nicht autorisierter Sender angezeigt und der Sender versucht die Autorisierungskriterien zu erfüllen. Das Autorisierungsfilter verwendet eine Black- und ein Whitelist, in denen die nicht autorisierten und autorisierten Sender vermerkt sind und werden.

In der US 5,371,787 ist eine Antwortdetektor-Einrichtung beschrieben, von der ein Anruf zu einem Teilnehmer gesteuert wird und in der untersucht wird, ob die Antwort auf den Anruf von einem Anrufbeantworter oder von einer Person gegeben wurde.

Die der Erfindung zugrunde liegende Aufgabe besteht darin, die Abwehr von Anrufen mit telefonischer Werbung bzw. Spam zu verbessern. Die Aufgabe wird durch die Merkmale des Patentanspruchs 1 gelöst.

Ein wesentlicher Aspekt eines erfindungsgemäßen Verfahrens ist darin zu sehen, dass eine erste und zweite Liste von Identifikationen vorgesehen ist, bei denen eine oder keine unerwünschte Telefonwerbung zu erwarten ist, und die Identifikation des Rufenden eines ankommenden Anrufes mit den Identifikationen in den Listen verglichen wird. Ist bei einem Anruf die Identifikation des Rufenden nicht in den Listen enthalten, wird der Anruf zu einer Anrufbehandlung gesteuert, mit deren Hilfe untersucht wird, ob eine Telefonwerbung empfangen wird. In Abhängigkeit von dem Untersuchungsergebnis werden die Listen entsprechend aktualisiert. Gemäß einem wesentlichen Aspekt eines weiteren erfindungsgemäßen Verfahrens werden nach einem Aktualisieren der Listen die Anrufe, bei denen die Identifikation des Anrufenden in der zweiten Liste eingetragen ist, zu dem gerufenen Teilnehmer gesteuert und die Anrufe, bei denen die Identifikation des Anrufenden in der ersten Liste eingetragen ist, abgewiesen. Ein Anruf ohne Identifikation wird an die Anrufbehandlung gesteuert und in Abhängigkeit von dem Untersuchungsergebnis wird der Anruf zum Gerufenen gesteuert oder abgewiesen.

Ein wesentlicher Vorteil der Erfindung ist darin zu sehen, dass die Zeit, die für das Erkennen und Abhören von telefonischer Werbung eingespart bzw. verringert wird, insbesondere in gewerblichen Betrieben dazu führt, dass wichtige Personalressourcen effektiver genutzt werden können. Auch können Leitungen, insbesondere Leitungen, über die mehrere Anrufe gleichzeitig geführt werden, durch das Abweisen von Anrufen insbesondere in der Signalisierungsphase effektiver genutzt werden. Hierdurch können die Leitungen zu den Vermittlungen und damit auch die Betriebskosten reduziert werden.

Nach einer vorteilhaften Weiterbildung der Erfindung wird durch die Anrufbehandlung der Anruf untersucht, ob der Anruf durch einen Anrufautomat mit automatisch angesagter Telefonwerbung durchgeführt wird. Dies kann vorteilhaft dadurch erfolgen, dass in der Anrufbehandlung aufgrund des Sprechpausen-/Sprechdauer-Verhältnisses der empfangenen Sprachinformation festgestellt wird, ob der aktuelle Anruf durch einen Anrufautomat mit automatisch angesagter telefonischer Werbung durchgeführt wird. Alternativ wird durch die Anrufbehandlung eine Sprach-Interaktion mit dem Anrufenden durchgeführt, wobei eine vorgegebene sprachliche Reaktion auf eine Sprachanfrage erwartet wird, und dass bei nicht zutreffender sprachlicher Reaktion des Anrufenden der Anruf als Anruf mit telefonischer Werbung festgestellt wird. Durch diese vorteilhaften Weiterbildungen kann mit wirtschaftlich geringem Aufwand festgestellt werden, ob ein Anrufautomat anruft, der telefonische Werbung übermitteln will, oder ob ein Teilnehmer, d.h. eine Person anruft.

Besonders vorteilhaft ist die Erfindung in einer mit einer Anrufbehandlung ausgestatteten Vermittlung, Nebenstellenanlage oder einen Softswitch vorgesehen, da hierdurch die Listen und die Anrufbehandlung für mehrere Teilnehmer zentral geführt werden bzw. durchgeführt wird und somit eine besonders wirtschaftliche Realisierung der Erfindung erreicht wird.

Weitere vorteilhafte Weiterbildungen der Erfindung sind den Unteransprüchen zu entnehmen.

Im Folgenden wird die Erfindung anhand von zwei zeichnerischen Darstellungen erläutert. Dabei zeigen
- Figur 1: eine Topologie, in der die Erfindung realisierbar ist, und
- Figur 2: in einem Ablaufdiagramm die Behandlung eines ankommenden Anrufs.

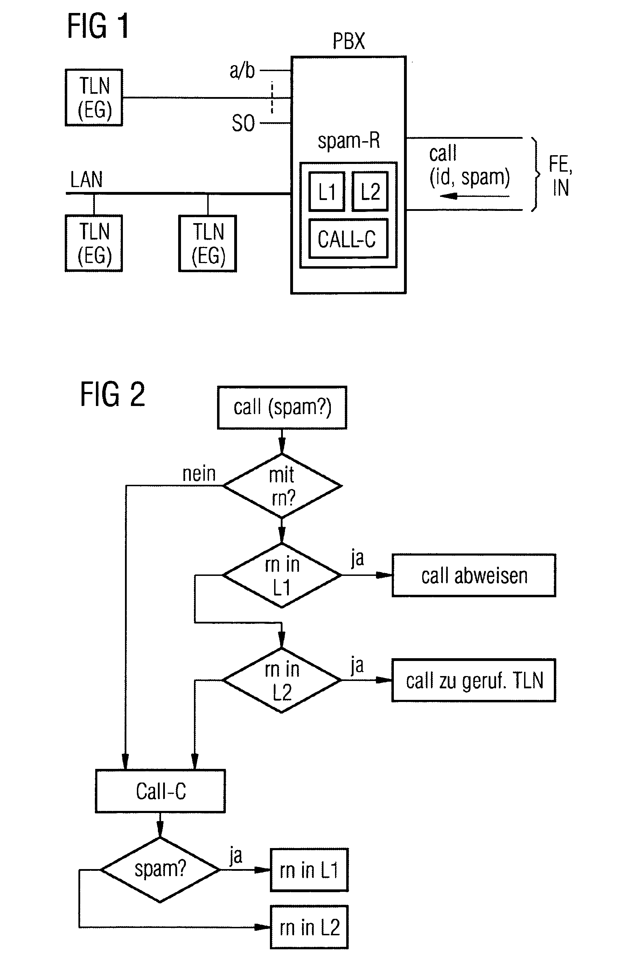

Figur 1 zeigt eine Netztopologie, in der das erfindungsgemäße Verfahren eingesetzt werden kann. An eine Vermittlungseinrichtung, im Ausführungsbeispiel eine Nebenstellenanlage PBX und im weiteren mit PBX bezeichnet, sind Endgeräte EG von Teilnehmern TLN angeschlossen, wobei die Endgeräte EG über eine analoge a/b- Schnittstelle a/b oder eine digitale ISDN-Schnittstelle SO einschließlich der jeweiligen Signalisierungsprozeduren an die PBX angeschlossen sind. Die PBX ist des weiteren über eine Schnittstelle mit einem lokalen Netz LAN verbunden - im weiteren mit LAN bezeichnet -, an das weitere Endgeräte EG anschließbar sind, wobei im LAN ein Internetprotokoll vorgesehen ist. Als Endgeräte EG sind an die a/b- und an die S0- Schnittstelle a/b, S0 Telefone, im Ausführungsbeispiel spezielle Telefone für PBX'en, und an das LAN spezielle Internet-Telefone oder Personal Computer mit Telefonfunktion angeschlossen.

In der PBX ist eine Spam- Routine Spam-R bzw. eine Routine für die Abwehr von telefonischer Werbung vorgesehen. In dieser sind zwei Listen L1,L2 realisiert, wobei in die erste Liste L1 Identifikationen id eingetragen sind oder werden, bei denen die zugeordneten Teilnehmer durch Anrufautomaten - nicht dargestellt - realisiert sind und diese Anrufautomaten versuchen, telefonische Werbung an beliebige Teilnehmer abzusetzen. In der Spam- Routine Spam-R ist eine zweite Liste implementiert, wobei in dieser Liste L2 Identifikationen rn eingetragen sind oder werden, bei denen die zugeordneten Teilnehmer keine Anrufautomaten mit unerwünschter Werbung sind. Die Spam- Routine Spam-R enthält des Weiteren eine Anrufbehandlung CALL-C, mit deren Hilfe Anrufe behandelt werden, deren Identifikationen id des Rufenden weder in der ersten noch in die zweite Liste L1, L2 eingetragen sind. Bei den Identifikationen id kann es sich um Rufnummern von den Telefonnetzen oder aber auch um Internetadressen von Internet-Teilnehmern mit Telefonfunktion handeln.

Die PBX ist zusätzlich mit Schnittstellen für den Anschluss an ein öffentliches Netz, insbesondere eines Telefonnetzes FE, eines Betreibers und/oder den Anschluss an das Internet IN ausgestattet - in Figur 1 durch die Bezeichnungen FE, IN angedeutet. Für das Ausführungsbeispiel sei angenommen, dass von dem Telefonnetz FE oder dem Internet IN Anrufe call mit telefonischer Werbung spam und ohne telefonische Werbung ankommen - in der Figur 1 durch die Bezeichnung call (spam) angedeutet.

Basierend auf den vorhergehenden Erläuterungen wird ein Ablauf der Erfindung anhand des Ablaufdiagramms in Figur 2 aufgezeigt. In einem ankommenden Anruf call wird zuerst die Identifikation id des Rufenden bzw. des rufenden Teilnehmers TLN gesucht. Die Identifikation id des Rufenden wird üblicherweise im Rahmen der Anrufsignalisierung übertragen - beispielsweise CLIP, oder Internetadresse oder Zwischenamtsignalisierung Nr.7. Für die Erläuterung der Erfindung in Figur sei angenommen, dass die Identifikationen id als Rufnummern angegeben sind und diese in Figur 2 mit rn bezeichnet sind. Nach dem Feststellen der Rufnummer rn des Rufenden wird diese mit den Rufnummern rn der ersten Liste L1 verglichen. Ist diese in der ersten Liste enthalten, wird der Anruf call abgewiesen, da es sich um einen Anruf call mit telefonischer Werbung handelt.

Ist die Rufnummer rn des Rufenden nicht in der ersten Liste L1 enthalten wird die zweite Liste L2 auf das Vorhandensein der Rufnummer rn überprüft. Wird die Rufnummer rn in der zweiten Liste L2 gefunden, so wird der ankommende Anruf call an den adressierten Teilnehmer TLN der PBX gesteuert bzw. durch die PBX oder das LAN vermittelt.

Ist die Rufnummer rn des Rufenden auch nicht in der zweiten Liste L2 angegeben oder es wird überhaupt keine Rufnummer rn übermittelt (CLIR), so wird der Anruf call mit Hilfe der PBX an die Anrufbehandlung CALL-C gesteuert. In dieser wird der ankommende Anruf call untersucht, ob der Anruf call durch einen Anrufautomat mit automatisch angesagter Telefonwerbung spam durchgeführt wird oder ob ein üblicher Telefonanruf vorliegt. Die Anrufe können mit mehreren alternativen Verfahren untersucht werden.

Gemäß einem ersten Verfahren wird das Sprechpausen/Sprechdauer- Verhältnis der empfangenen Sprachinformation ermittelt. Aufgrund dieses Verhältnisses kann relativ sicher festgestellt werden, ob es sich bei der empfangenen Sprachinformation um ein Sprachinformation eines Teilnehmers TLN oder eines Anrufautomaten mit telefonischer Werbung spam handelt. Dies ist möglich, da die Sprechpausen bei Anrufeinrichtungen bzw. Anrufautomaten wesentlich kürzer und die Sprechdauern länger sind als bei Anrufen von Teilnehmern bzw. Personen.

Bei einem weiteren Verfahren, Anrufe von Anrufautomaten festzustellen, werden Sprachproben der ankommenden Sprachinformation aufgezeichnet und mit bereits aufgezeichneten Sprachproben von Anrufautomaten mit telefonischer Werbung spam verglichen. Bei einer weitgehenden Übereinstimmung ist davon auszugehen, dass ein Anruf mit telefonischer Werbung spam vorliegt.

Gemäß einem weiteren Verfahren zum Feststellen von Anrufen von Anrufautomaten wird von der Anrufbehandlung CALL-C eine Interaktion mit dem ankommenden Anruf call versucht, d.h. es wird eine Eingabeaufforderung übermittelt, auf die bestimmte Eingaben durch den Anrufenden erwartet werden. Reagiert der Anrufende nicht, ist davon auszugehen, dass es sich um einen Anruf mit telefonischer Werbung spam handelt.

In Abhängigkeit von den Untersuchungsergebnissen wird die Rufnummer rn des ankommenden Anrufs call entweder in die erste oder zweite Liste L1,L2 eingetragen - bei Anrufen call ohne übermittelte Rufnummer rn erfolgt keine Eintragung - und der ankommende Anruf call wird abgewiesen oder an den adressierten Teilnehmer TLN bzw. and das adressierte Endgerät EG weitergeleitet bzw. von der PBX oder dem LAN vermittelt.

Nach einer nicht in Figur 2 dargestellten Variante wird erfindungsgemäß ein Anruf call mit telefonischer Werbung spam trotz der Untersuchung in der Anrufbehandlung CALL-C an den adressierten Teilnehmer TLN bzw. an das adressierte Endgerät EG gesteuert. In diesem Fall ist vorgesehen, den Anruf call an die Anrufbehandlung CALL-C zurück zu steuern, um mit deren Hilfe Sprachproben der telefonischen Werbung spam aufzuzeichnen. Diese kann dann im Rahmen einer Untersuchung von weiteren Anrufen call zum Vergleich mit den darin enthaltenen Sprachproben herangezogen werden. Alternativ oder als eine zusätzliche Maßnahme wird erfindungsgemäß, nach dem ein Teilnehmer TLN einen Anruf call mit telefonischer Werbung spam festgestellt hat, durch spezielle Eingaben am Endgerät EG des Teilnehmers TLN die Rufnummer rn bzw. die Identifikation id des Anrufs call in die erste Liste L1 eingetragen, wodurch bei einem erneuten Anruf call dieses Teilnehmers TLN eine sofortige Abweisung dieses Anrufs call bewirkt wird.

Die Erfindung ist nicht auf dieses Ausführungsbeispiel begrenzt, sondern kann in allen Kommunikationsnetzen mit unterschiedlicher Identifikation bzw. Adressierungen eingesetzt werden, wobei hierbei für die verschiedenen Netze verschiedene erste und zweite Listen verwendet werden können. Auch sind darauf abgestimmte Verfahren zum Feststellen bzw. zum Erkennen oder Ermitteln von Anrufen mit telefonischer Werbung möglich, wobei zu berücksichtigen ist, dass bei der Übertragung von nicht- sprachlicher Information wie beispielsweise E-Mails meist Anrufautomaten verwendet werden und ein Erkennen einer Werbung spam schwieriger ist.

## Patentansprüche

1. Verfahren zur Abwehr unerwünschter telefonischer Werbung (spam),
a) bei dem eine erste und zweite Liste (L1,L2) von Identifikationen (id,rn) vorgesehen ist, bei denen eine oder keine unerwünschte Werbung (spam) zu erwarten ist,
b) bei dem die Identifikation (id,rn) des Rufenden eines ankommenden Anrufes (call) mit den Identifikationen (id,rn) in den Listen (L1,L2) verglichen wird,
c) bei dem ein Anruf (call), dessen Identifikation (id,rn) des Rufenden nicht in den Listen (L1,L2) enthalten ist, zu einer Anrufbehandlung (CALL-C) gesteuert wird,
d) bei dem mit Hilfe der Anrufbehandlung (CALL-C) untersucht wird, ob bei diesem Anruf eine telefonische Werbung (spam) empfangen wird,
e) bei dem in Abhängigkeit von dem Untersuchungsergebnis die Listen (L1,L2) entsprechend aktualisiert werden derart, dass die Identifikation (id,rn) des ankommenden Anrufs (call) entweder in die erste oder zweite Liste (L1,L2) eingetragen wird,
f) bei dem die Anrufe (call), bei denen die Identifikation (id,rn) des Anrufenden in der zweiten Liste (L2) eingetragen ist, zum Gerufenen gesteuert werden und
g) die Anrufe (call), bei denen die Identifikation (id,rn) des Anrufenden in der ersten Liste (L1) eingetragen ist, abgewiesen werden,
h) bei dem ein Anruf (call) ohne Identifikation (id,rn) an die Anrufbehandlung (CALL-C) gesteuert wird,
i) bei dem in Abhängigkeit von dem Untersuchungsergebnis der Anruf (call) zum Gerufenen gesteuert oder abgewiesen wird,
**dadurch gekennzeichnet, dass**
j) ein Anruf (call) mit telefonischer Werbung (spam) trotz Untersuchung in der Anrufbehandlung (CALL-C) zum Gerufenen gesteuert wird und entweder durch den Gerufenen (TLN) zur Anrufbehandlung (CALL-C) gesteuert wird und Signalproben oder Sprachproben dieses Anrufs (call) in der Anrufbehandlung (CALL-C) erfasst und gespeichert werden, so dass diese Proben im Rahmen der Untersuchung von weiteren Anrufen (call) zum Vergleich mit darin enthaltenen Sprachproben herangezogen werden können, um in Abhängigkeit von dem Vergleichsergebnis den weiteren Anruf (call) als Anruf (call) mit oder ohne telefonischer Werbung (spam) festzustellen, oder der Gerufene (TLN) durch eine Eingabe an einem Endgerät (EG) des Gerufenen veranlasst, dass die Identifikation (id,rn) des Rufenden (TLN) in die erste Liste (L1) eingetragen wird.

2. Verfahren zur Abwehr unerwünschter Werbung 1, dadurch
gekennzeichnet,
dass die Identifikation (id,rn) als eine Rufnummer (rn) oder eine Internetadresse angegeben ist.

3. Verfahren nach einem der Ansprüche 1 oder 2, dadurch
gekennzeichnet,
dass durch die Anrufbehandlung (CALL-C) der Anruf (call) daraufhin untersucht wird, ob der Anruf (call) durch einen Anrufautomat mit automatisch angesagter Werbung (spam) durchgeführt wird.

4. Verfahren nach Anspruch 3, **dadurch gekennzeichnet**,
dass in der Anrufbehandlung (CALL-C) mit Hilfe des ermittelten Sprechpausen-/Sprechdauer-Verhältnisses der empfangenen Sprachinformation ermittelt wird, ob der aktuelle Anruf (call) durch einen Anrufautomat mit automatisch angesagter telefonischer Werbung (spam) durchgeführt wird.

5. Verfahren nach Anspruch 3 oder 4, **dadurch gekennzeichnet**,
dass durch die Anrufbehandlung (CALL-C) eine Sprach-Interaktion mit dem Anrufenden durchgeführt wird, wobei eine vorgegebene sprachliche Reaktion auf eine Sprachanfrage erwartet wird, und dass bei nicht zutreffender sprachlicher Reaktion des Rufenden der Anruf (call) als Anruf (call) mit telefonischer Werbung (spam) festgestellt wird.

6. Verfahren nach Anspruch 3, 4 oder 5, dadurch
gekennzeichnet,
dass mit Hilfe der Anrufbehandlung (CALL-C) Sprachproben von Anrufautomaten mit automatisch angesagter telefonischer Werbung (spam) gespeichert werden, dass Sprachproben eines aktuelle Anrufs (call) mit den gespeicherten Sprachproben verglichen werden, und dass in Abhängigkeit von dem Vergleichsergebnis der aktuelle Anruf (call) als Anruf (call) mit oder ohne telefonischer Werbung (spam) festgestellt wird.

7. Verfahren nach einem der vorhergehenden Ansprüche, dadurch
gekennzeichnet,
dass die Listen (l1,L2) sowie die Anrufe (call) in eine mit einer Anrufbehandlung (CALL-C) ausgestatteten Vermittlung, Nebenstellenanlage (PBX) oder einen Softswitch gebildet bzw. aktualisiert sowie gesteuert werden.

## Claims

1. Method for protection against undesirable telemarketing advertisements (spam),
a) whereby a first and second list (L1, L2) of identifications (id,rn) are established, with which a telemarketing advertisement or no undesirable telemarketing advertisement (spam) is expected,
b) whereby the identification (id, rn) of the caller of an incoming call (call) is compared to the identifications (id, rn) in the lists (L1, L2),
c) whereby a call (call) of which the identification (id, rn) of the caller is not found in the lists (L1,L2) is routed to a call processing (CALL-C),
d) whereby, with the help of the call processing (CALL-C), a check is made on whether, with this call, telemarketing advertising (spam) is being received,
e) whereby, as a function of the check result, the lists (L1,L2) are updated accordingly in such a way that the identification (id, rn) of the incoming call (call) is entered on either the first or second (L1, L2),
f) whereby the calls (call) of which the identification (id, rn) of the caller is recorded in the second list (L2) are routed to the called party, and
g) the calls (call) of which the identification (id, rn) of the caller is recorded in the second list (L1) are rejected,
h) whereby a call (call) without identification (id, rn) is routed to th call processing (CALL-C),
i) whereby, as a function of the investigation result, the call (call) is routed to the caller or rejected, **characterised in that**
j) a call (call) with telemarketing advertising (spam) which, despite investigation in the call processing (CALL-C) is routed to the called party and is routed by the called party (TLN) either to call processing (CALL-C) and signal samples or speech samples from this call (call) are acquired and stored in the call processing (CALL-C), such that these samples can be drawn on in the framework of the investigation of further calls (call) for comparison with the speech samples contained therein, in order, as a function of the comparison result, a further call (call) can be determined as being a call (call) with or without telemarketing advertising, or the called party (TLN), by an input at a terminal (EG) of the called party, arranges for the identification (id, rn) of the caller (TLN) to be recorded in the first list (LI).

2. Method for protection against undesirable advertising 1, **characterised in that** the identification (id, rn) is recorded as a call number (rn) or an Internet address.

3. Method according to one of claims 1 or 2, **characterised in that**, by the call processing (CALL-C), the call (call) is investigated as to whether the call (call) is being made by an automated calling device with automatically recorded advertising (spam).

4. Method according to claim 3, **characterised in that**, in the call processing (CALL-C), with the aid of the speech pause-speech duration ratio of the received speech information, it is determined whether the current call (call) is being made by an automatically engendered telephone advertising system (spam).

5. Method according to claim 3 or 4, **characterised in that**, by the call processing (CALL-C), a speech interaction is carried out with the calling party, wherein a predetermined speech reaction to a speech enquiry is expected, and, if the speech reaction from the calling party is not correct, the call (call) is identified as a call (call) with telemarketing advertising (spam).

6. Method according to claim 3, 4 or 5, **characterised in that**, with the help of the call processing (CALL-C), speech samples of automated calling systems with automatically recorded telemarketing advertising (spam) are stored, that speech samples of a current call (call) are compared with stored speech sampled, and that, as a function of the comparison result, the current call (call) is identified as a call (call) with or without telemarketing advertising (spam).

7. Method according to any one of the preceding claims, **characterised in that** the lists (L1, L2) and the calls (call) are formed or updated and routed respectively by an exchange system, private branch exchange (PBX), or a soft switch provided with a call processing (CALL-C).

## Revendications

1. Procédé de protection contre des annonces publicitaires indésirables (spam),
a) dans lequel il est prévu une première et une seconde liste (L1, L2) d'identifications (id, rn) pour lesquelles une ou aucune annonce publicitaire indésirable (spam) (n') est attendue,
b) dans lequel l'identification (id, rn) de l'appelant d'un appel (call) arrivant est comparée aux identifications (id, rn) dans les listes (L1, L2),
c) dans lequel un appel (call), dont l'identification (id, rn) de l'appelant n'est pas contenue dans les listes (L1, L2), est dirigé vers un traitement d'appel (CALL-C),
d) dans lequel il est examiné à l'aide du traitement d'appel (CALL-C) si une annonce publicitaire téléphonique (spam) est reçue avec cet appel,
e) dans lequel, en fonction du résultat de l'examen, les listes (L1, L2) sont actualisées en correspondance d'une manière telle que l'identification (id, rn) de l'appel arrivant (call) soit inscrite soit dans la première liste, soit dans la seconde liste (L1, L2),
f) dans lequel les appels (call), pour lesquels l'identification (id, rn) de l'appelant est inscrite dans la seconde liste (L2), sont dirigés vers l'appelé et
g) les appels (call), pour lesquels l'identification (id, rn) de l'appelant est inscrite dans la première liste (L1), sont rejetés,
h) dans lequel un appel (call) sans identification (id, rn) est dirigé vers le traitement d'appel (CALL-C),
i) dans lequel, en fonction du résultat de l'examen, l'appel (call) est dirigé vers l'appelé ou rejeté, **caractérisé en ce que**
j) un appel (call) avec une annonce publicitaire téléphonique (spam) est dirigé vers l'appelé malgré un examen dans le traitement d'appel (CALL-C) et soit il est dirigé par l'appelé (TLN) vers le traitement d'appel (CALL-C) et des échantillons de signal ou des échantillons de paroles de cet appel (call) sont détectés et enregistrés dans le traitement d'appel (CALL-C) de sorte que ces échantillons dans le cadre de l'examen d'autres appels (call) puissent être mis à contribution pour la comparaison avec des échantillons de paroles contenus dans ces échantillons afin de déterminer, en fonction du résultat de la comparaison, l'autre appel (call) en tant qu'appel (call) avec ou sans annonce publicitaire téléphonique (spam), soit l'appelé (TLN) fait en sorte par une entrée dans un appareil terminal (EG) de l'appelé que l'identification (id, rn) de l'appelant (TLN) soit inscrite dans la première liste (L1).

2. Procédé de protection contre des annonces publicitaires indésirables selon la revendication 1, caractérisé
en ce que l'identification (id, rn) est indiquée en tant que numéro d'appel (rn) ou en tant qu'adresse Internet.

3. Procédé selon l'une quelconque des revendications 1 ou 2, caractérisé
en ce que le traitement d'appel (CALL-C) examine ensuite l'appel (call) pour savoir si l'appel (call) est exécuté par un automate d'appel avec une annonce publicitaire (spam) annoncée automatiquement.

4. Procédé selon la revendication 3, **caractérisé en ce que**, dans le traitement d'appel (CALL-C) à l'aide du rapport pauses sans paroles détectées / temps avec paroles détectés, des informations vocales reçues, il est détecté si l'appel (call) courant est exécuté par un automate d'appel avec une annonce publicitaire téléphonique (spam) annoncée automatiquement.

5. Procédé selon la revendication 3 ou 4, **caractérisé en ce que**, par le traitement d'appel (CALL-C), une interaction vocale est exécutée avec l'appelant, une réaction vocale prédéfinie à une demande vocale étant attendue, et **en ce que**, en cas de réaction vocale non appropriée de l'appelant, il est déterminé que l'appel (call) est un appel (call) avec une annonce publicitaire téléphonique (spam).

6. Procédé selon la revendication 3, 4 ou 5, **caractérisé en ce que**, à l'aide du traitement d'appel (CALL-C), des échantillons de paroles d'automates d'appel avec une annonce publicitaire téléphonique (spam) annoncée automatiquement sont enregistrés, **en ce que** des échantillons de paroles d'un appel (call) courant sont comparés aux échantillons de paroles enregistrés et **en ce que**, en fonction du résultat de la comparaison, il est déterminé que l'appel (call) courant est un appel (call) avec ou sans annonce publicitaire téléphonique (spam).

7. Procédé selon l'une quelconque des revendications précédentes, caractérisé
en ce que les listes (L1, L2) ainsi que les appels (call) sont formés ou mis à jour ainsi que dirigés vers un central téléphonique, autocommutateur privé (PBX) équipés d'un traitement d'appel (CALL-C) ou un commutateur logiciel.
